# EUROPEAN PATENT SPECIFICATION

(11) **EP 0 696 493 B1**
(45) Date of publication and mention of the grant of the patent: **30.09.1998**
(21) Application number: 95906495.7
(22) Date of filing: 18.01.1995
(51) Int. Cl.: B23K 26/00, B23K 26/08

(54) **LASER PROCESSING APPARATUS**
LASERBEHANDLUNGSVORRICHTUNG
APPAREIL DE TRAITEMENT LASER

(30) Priority: 25.02.1994 JP 27119/94
(43) Date of publication of application: 14.02.1996
(73) Proprietor: FANUC LTD., Minamitsuru-gun, Yamanashi 401-05 (JP)
(72) Inventor: YAMAZAKI, Etsuo, Yamanashi 409-01 (JP); NAKATA, Yoshinori Fanuc Mansion Harimomi 4-206, Yamanashi 401-05 (JP); SUZUKI, Kazuhiro Fanuc Mansion Harimomi 12-602, Yamanashi 401-05 (JP); MORI, Atsushi Fanuc Dai-3 Vira-karamatsu, Yamanashi 401-05 (JP)
(74) Representative: Brunner, Michael John
(86) International application number: JP9500056
(87) International publication number: WO9523046

(56) References cited:
- EP-A- 0 324 032
- JP-A- 2 020 683
- JP-A-61 038 793
- US-A- 4 169 976
- US-A- 4 914 599
- PATENT ABSTRACTS OF JAPAN vol. 013 no. 122 (M-807) ,27 March 1989 & JP-A-63 295085 (FANUC LTD) 1 December 1988,
- PATENT ABSTRACTS OF JAPAN vol. 012 no. 190 (M-704) ,3 June 1988 & JP-A-62 296985 (SANYO ELECTRIC CO LTD) 24 December 1987,

## Description

### Technical Field

This invention relates to a laser beam machine for cutting the shape of a hole according to a machining program, and more particularly to a laser beam machine which is capable of cutting the shape of a hole with an enhanced cutting speed.

### Background Art

Conventionally, to machine the shape of a hole through a plate material, such as a steel plate, by a laser beam machine, piercing, i.e. the machining of perforating a small hole, is first carried out, and then cutting is carried out along the shape of the hole.

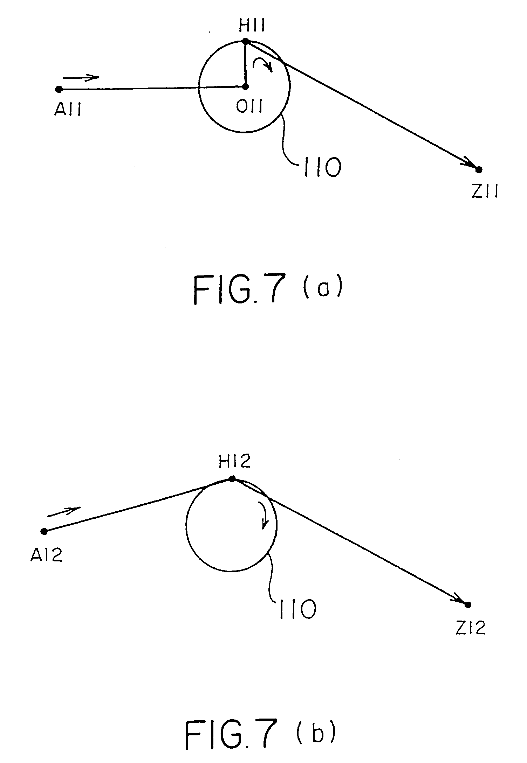

FIGS. 7 (a) and 7 (b) show examples of conventional machining paths for cutting circular holes. FIG. 7 (a) shows a first example, while FIG. 7 (b) shows a second example. In the case of FIG. 7 (a) example, the machining head starts to move from a start position A11, and once stops at a central position O11 of a circular hole 110, where laser beam irradiation is started to carry out piercing. After completion of piercing, cutting is started from the central position O11, and continued until the machining head reaches a point H11. From the point H11, the machining head moves along the circumference of the circular hole 110 until it comes to the point H11 again, where the machining head once stops, thereby completing cutting of the hole, and the laser beam irradiation is also stopped. Thereafter, the machining head moves to a final stop position Z11.

In the case of the FIG. 7 (b) example, the machining head starts to move from a start position A12, and directly reaches a point H12 on the circumference of the circular hole 110. The machining head once stops at the point H12, and then the laser beam irradiation is started to carry out piercing. After completion of piercing, cutting is started from the point H12, and the machining head moves along the circumference of the circular hole 110 until it comes to the point H12 again. At the point H12, the machining head once stops, thereby completing cutting of the hole, and the laser beam irradiation is also stopped, followed by the machining head moving to a final stop position Z12.

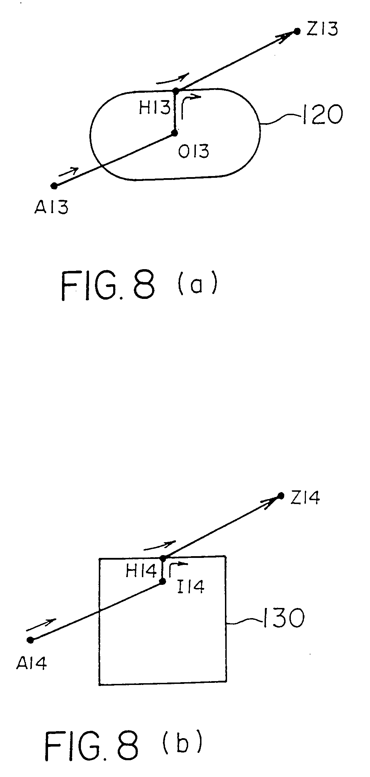

FIG. 8 (a) and FIG. 8 (b) show examples of conventional machining paths for cutting a slot and a square hole. FIG. 8 (a) shows an example of the machining path for the slot, while FIG. 8(b) an example of the machining path for the square hole. In the case of FIG. 8 (a), the machining head starts to move from a start position A13, and once stops at a central position O13 of a slot 120, followed by starting irradiation of the laser beam for piercing. After completion of piercing, cutting is started from the central position O13, and continued until the machining head reaches a point H13, from which the machining head moves along the periphery of the slot until it comes to the point H13 again, where the machining head once stops, thereby completing cutting of the slot. At the same time, the laser beam irradiation is also stopped. Thereafter, the machining head moves to a final stop position Z13.

In the case of FIG. 8 (b), the machining head starts to move from a start position A14, and once stops at a point I14 within a square hole 130, followed by starting irradiation of the laser beam for piercing. After completion of piercing, cutting is started from the point I14, and continued until the machining head moves to a point H14, from which the machining head moves along the periphery of the square hole 130 until it comes back to the point H14 again, where the machining head once stops, thereby completing cutting of the square hole. At the same time, laser beam irradiation is also stopped. Thereafter, the machining head moves to a final stop position Z14.

In all of the above examples of the machining path, the machining head stops two times, i.e. upon piercing and upon completion of cutting of a hole. Therefore, it is necessary to carry out deceleration and acceleration before and after stoppage of the machining head, requiring the longer time period for machining.

Especially, the machining path shown in FIG. 7 (a) is an ordinary one usually followed in cutting a circular hole, but the machining head undergoes a drastic or sharp turn at the point H11, requiring a rapid acceleration and deceleration on the drive mechanism side. Therefore, a slow-down of the feed rate is inevitable, requiring still the longer time period for machining.

As means for eliminating the above inconvenience in machining, a so-called running piercing is generally known. The running piercing dispenses with positioning of the machining head for piercing, through generation of a smooth path for the overall route for machining. That is, according to the running piercing, piercing is carried out without stopping the machining head at any intermediate point when the machining head is moved from a start position to a cutting start position on the periphery of a hole to be cut. This method of machining permits the drive mechanism to cause continuous cutting without requiring the same of a drastic acceleration and deceleration. Further, when the machining head cuts round the periphery of the hole and returns to the cutting start position, the machining head is caused to move further in an overlapping manner along the part of the periphery, and then move on the smooth path up to the final stop position. This also dispenses with positioning of the machining head in cutting off the hole, i.e. upon completion of cutting off the hole. Therefore, it is no longer necessary to carry out positioning of the machining head two times, thereby making it possible to realize a high-speed cutting process.

However, machining paths along which the running piercing is carried out as described above are complicated, and hence machining programs therefor are also complicated, requiring a long time period for programming.

### Disclosure of the Invention

The present invention has been made in view of these circumstances, and the object thereof is to provide a laser beam machine which is capable of easily generating a machining path for cutting, which dispenses with positioning of a machining head.

According to the present invention there is provided a laser beam machine for cutting a hole according to a machining program, comprising:
reading means for reading the shape of the hole, a size of the hole, a central position of the hole, and a start position and a final stop position of a front end point of a machining head;
smooth path-generating means generating a machining path from the shape of the hole, the size of the hole, the central position of the hole, the start position, and the final stop position, such that an overall path for the front end point of the machining head becomes a smooth one, and wherein the machining path is formed by segments and circular arcs, and the segments and the circular arcs are generated such they join one another, and the path-generating means depicts the circular arcs by multiplying the size of the hole by predetermined coefficients, and;
machining program generating means for generating the machining program based on the machining path, wherein the machining program-generating means generates the machining program such that the machining head does not stop through the whole process from the start position to the final stop position.

The reading means reads the shape of the hole to be cut, the size of the hole, the central position of the hole, and the start position and the final stop position of the front end point of the machining head. The smooth path-generating means generates the machining path from the shape of the hole, the size of the hole, the central position of the hole, the start position, and the final stop position, such that the overall path for the front end point of the machining head becomes a smooth one. The machining program-generating means generates the machining program based on the machining path.

Thus, the smooth path for the front end point of the machining head from the start position to the final stop position thereof is generated from the shape of the hole to be cut, the size of the hole, the central position of the hole, the start position and the final stop position. The size of the hole, the central position of the hole, the start position and the final stop position are data which can be easily input by an operator, based on which the smooth path-generating means automatically generates the smooth machining path. Therefore, it is possible to easily generate a machining program for cutting along the smooth machining path.

### Brief Description of the Drawings

FIG. 1 is a diagram showing construction of the invention;
FIG. 2 is a diagram showing the whole arrangement of a laser beam machine according to the invention;
FIG. 3 is a diagram which is useful in explaining how a smooth path is generated by the laser beam machine according to the invention;
FIG. 4 (a), FIG. 4 (b), FIG. 4 (c), and FIG. 4 (d) show two kinds of form of the smooth path, in which FIG. 4 (a), FIG. 4 (b), and FIG. 4 (c) show a first form, and FIG. 4 (d) shows a second form;
FIG. 5 is a flowchart for generating a smooth path, according to the invention;
FIG. 6 (a) and FIG. 6 (b) show examples of the smooth path for cutting holes other than circular holes, in which FIG. 6 (a) shows a case of cutting a slot, and FIG. 6 (b) a case of cutting a square hole;
FIG. 7 (a) and FIG. 7 (b) show examples of conventional machining paths for cutting circular holes, in which FIG. 7 (a) shows a first one, and FIG. 7 (b) a second one; and
FIG. 8 (a) and FIG. 8 (b) show examples of conventional machining paths for cutting a slot and a square hole, in which FIG. 8 (a) shows a case of cutting a slot, and FIG. 8 (b) a case of cutting a square hole.

### Best Mode for Carrying Out the Invention

The invention will now be described in detail with reference to drawings showing an embodiment of the invention.

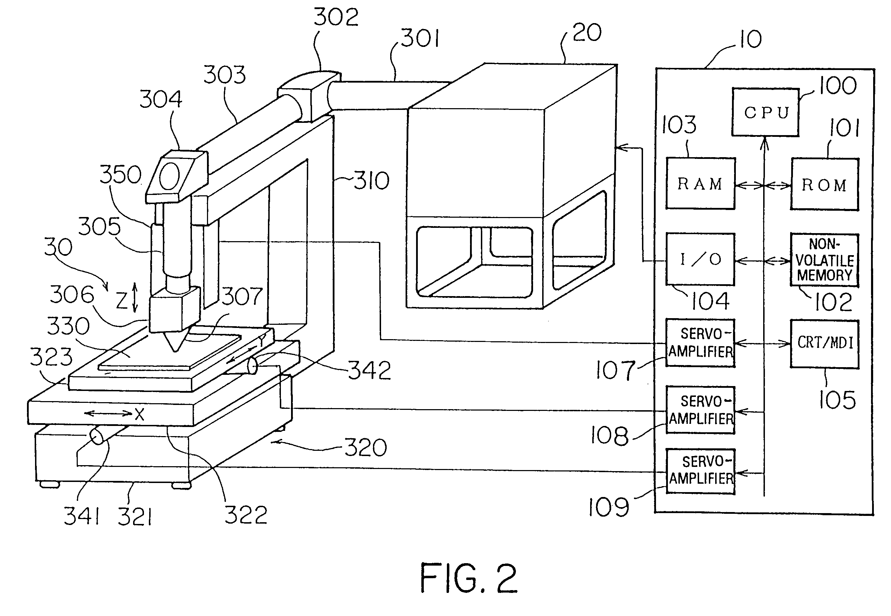

FIG. 2 shows the whole arrangement of a laser beam machine according to the invention. In FIG. 2, the laser beam machine is comprised of a computer numerical control (CNC) unit 10, a laser oscillator 20 and a working machine 30.

The CNC unit 10 is constructed such that a processor 100 forms a central part thereof. As a ROM 101, an EPROM or EEROM is used for storing a system program therein. Further, as a non-volatile memory 102, there is used a CMOS backed up by a battery for retaining a machining program, a smooth path-generating program, various parameters, and so forth, even after the power is turned off. The processor 100 reads the machining program based on the system program stored in a RAM 103, to control the overall operation of the laser beam machine. Further, the processor 100 causes a machining head 306 to move along a machining path generated based on the program according to the invention to cut a hole through a workpiece 330, details of which will be described later.

The CNC unit 10 also includes an I/O unit 104 for converting a control signal from the processor 100, and delivers the converted control signal to the laser oscillator 20. The laser oscillator 20 emits a pulsed laser beam according to the converted control signal. The pulsed laser beam is transmitted via a light guide passage 301, a mirror unit 302, a light guide passage 303, a mirror unit 304, a light guide passage 305, and the machining head 306, followed by being emitted from a nozzle 307 onto the workpiece 330.

The CNC unit 10 has a CRT/MDI 105 connected thereto, via which various programs and data are input in an interactive manner.

The working machine 30 is comprised of a support frame 310 supporting the light guide passage 303, the mirror units 302, 304, etc., and a table support 320 supporting a table 323. On an open end of the support frame 310 is arranged a machining head-moving mechanism 350. The machining head 306 is arranged at an open end of the light guide passage 305 which is in the form of an extendible telescope, and moved in Z direction according to the rotation of a servomotor provided within the machining head-moving mechanism 350.

A table 322 is arranged on a basis table 321 of the table support 320, and further a table 323 is arranged on the table 322. The tables 322 and 323 are moved in X direction and Y direction by table-moving mechanisms 341 and 342 formed by servomotors provided on respective lower end sides of the tables 322 and 323. The workpiece 330, which is fixed on the table 323, can be freely moved on an X-Y plane.

The servomotors provided for the machining head-moving mechanism 350, and the table-moving mechanisms 341 and 342 are respectively connected to servoamplifiers 107, 108, and 109 provided within the CNC 10, and have their rotations controlled by respective axial control signals from the processor 100. The tables 322, 323, and the machining head 306 are moved according to the rotations of the respective servomotors. The laser beam emitted from the nozzle 307 depicts a locus on the workpiece 330 according to the movements of the tables 322 and 323, thereby cutting the workpiece 330 to a predetermined shape.

Next, description will be made of how a smooth path is generated for cutting a circular hole through the workpiece 330.

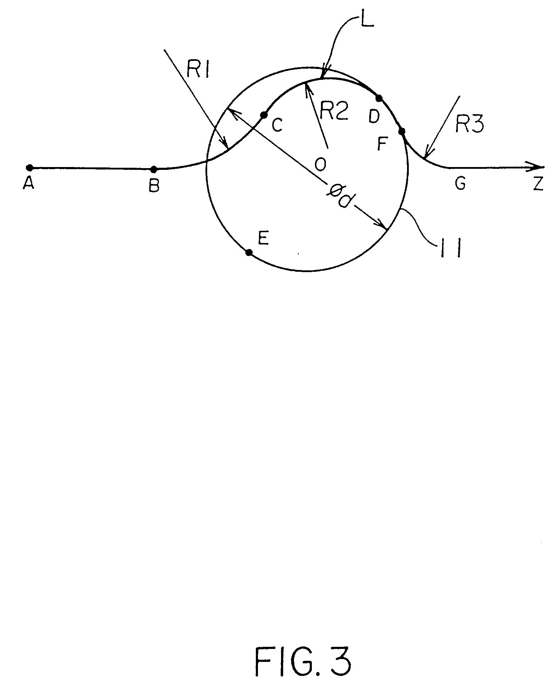

FIG. 3 shows how the smooth path is generated according to the invention. Here, description will be made of the case of cutting a circular hole 11 through the workpiece 330. In cutting the circular hole 11, the operator inputs various data known in advance to the CNC 10. That is, a designation code Q for the circular hole, which is to be cut, a size ⌀d of the hole, and a central position O of the hole, and a start position A and a final stop position Z of a front end point of the machining head 306. The processor 100 of the CNC 10 reads these various data and generates a smooth path L by the smooth path-generating program. The smooth path L is indicated in FIG. 3 as a line A → B → C → D → E → F → G → Z, and the machining head moves along a smooth path portion from the start position A to a point D on the circular hole 11, from which the machining moves round the periphery of the circular hole. Then, the machining head moves from the point D up to a point F in a partially overlapping manner, and then follows another smooth path portion until it reaches the final stop position Z.

Of the smooth path L, a section from B to C is a circular arc having a radius of R1. The radius R1 is determined as ⌀d × 0.7. Next, a section from C to D is a circular arc having a radius of R2. The radius R2 is determined as ⌀d × 0.35. The overlapping section from D to F is set e.g. to 3.0 mm. A circular arc from F to G following the overlapping section has a radius of R3. The radius R3 is determined as ⌀d × 0.35, similarly to the radius R2.

Based on the smooth path L thus determined, the processor 100 of the CNC 10 further generates the machining program. That is, the processor 10 generates the machining program by adding, to data of coordinates designating the smooth path L, an instruction of the running piercing for the section from C to D, laser output instructions for the sections C → D → E → F, and instructions of feed rates of the machining head over the whole smooth path L. The machining program is once stored into the CNC 10, and then read out upon machining to carry out cutting by laser beam.

Thus, in the present embodiment, the smooth path L for the front end point of the machining head 306 from the start position A to the final stop position Z is generated from the designation code Q for the shape of the hole, the size ⌀d of the hole, the central position O of the hole, the start position A and the final stop position Z. These data Q, ⌀d, O, A, and Z are data which can be easily input by the operator, and the smooth path L is automatically generated based on these data. Therefore, it is possible to generate the machining program for cutting along the smooth path, with ease in a short time period.

In the cutting process carried out based on this machining program, piercing is completed during movement of the machining head 306 from the point C to the point D. Further, stoppage of the laser output is completed during movement of the machining head 306 from the point D to the point F. Therefore, it is possible to cut the hole without stopping the machining head even once, thereby enabling a high-speed cutting to be realized.

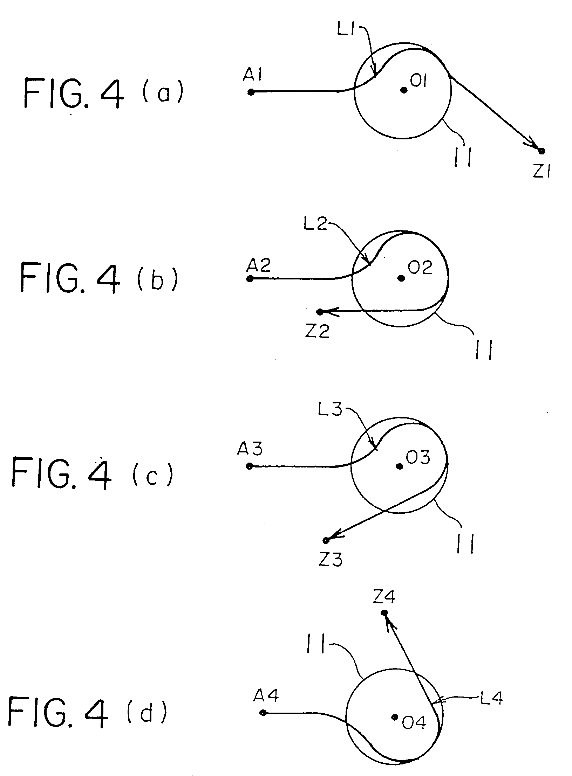

The above smooth path L has two kinds of form, as shown in FIG. 4 (a), FIG. 4 (b), FIG. 4 (c), and FIG. 4 (d), depending on the positional relationship between the start position A, the central position O, and the final stop position Z.

FIG. 4 (a), FIG. 4 (b), FIG. 4 (c), and FIG. 4 (d) are figures showing two kinds of form of the smooth path. FIG. 4 (a), FIG. 4 (b) and FIG. 4 (c) show the first form, and FIG. 4 (d) shows the second form. In the FIG. 4 (a) example, a final stop position Z1 is located below an extension of a line connecting between a start position A1 and a central position O1. In such a case, a smooth path L1 is generated in a clockwise (CW) direction. In the case of FIG. 4(b) and FIG. 4 (c), similarly to the case of FIG. 4 (a), final stop positions Z2 and Z3 are located below lines connecting between start positions A2 and A3 and central positions O2 and O3, respectively. Therefore, smooth paths L2 and L3 are generated in clockwise (CW) directions.

In contrast, in the FIG. 4 (d) example, a final stop position Z4 is located above a line connecting between a terminal point A4 and a central position O4. In such a case, a smooth path L4 is generated in a counterclockwise (CCW) direction.

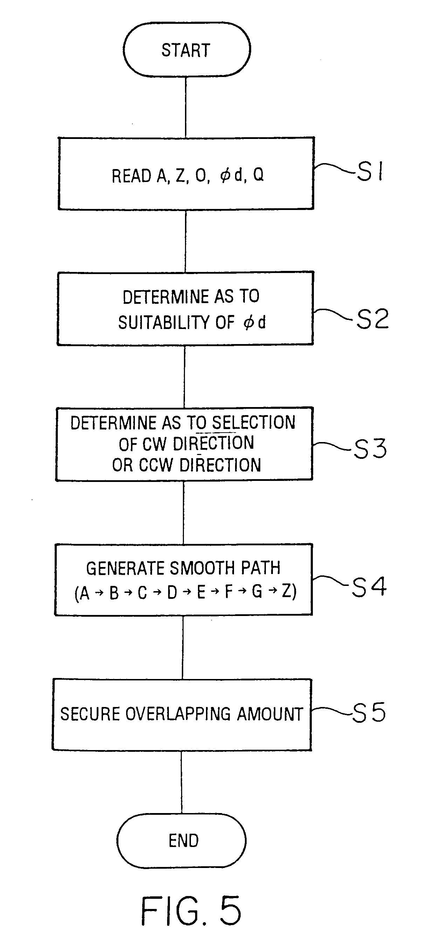

FIG. 5 is a diagram showing a flowchart for generating a smooth path by the laser beam machine according to the invention. In the figure, numerals following S designate step numbers.
[S1] A start position A, a final stop position Z of the front end point of the machining head 306, a central position O of a hole to be cut, the size ⌀d of the hole, and a designation code Q for the hole are read.
[S2] It is determined whether or not the size ⌀d is suitable for generating the smooth path. If the size ⌀d is outside a predetermined range, the machining path is generated by a conventional method.
[S3] It is determined from the positional relationship between the start position A, the central position O and the final stop position Z whether the smooth path L should extend in the CW direction or in the CCW direction.
[S4] The smooth path L is generated from the start position A, the final stop position Z, the central position O of the hole, the size ⌀d of the hole, and the designation code Q for the shape of the hole.
[S5] It is confirmed whether or not an overlapping amount, for example, of 3 mm in the case of FIG. 3 is allocated. If the overlapping amount is not allocated, the point F is corrected to a point which is away from the point D by the overlapping amount, and then the circular arc F to G is determined again.

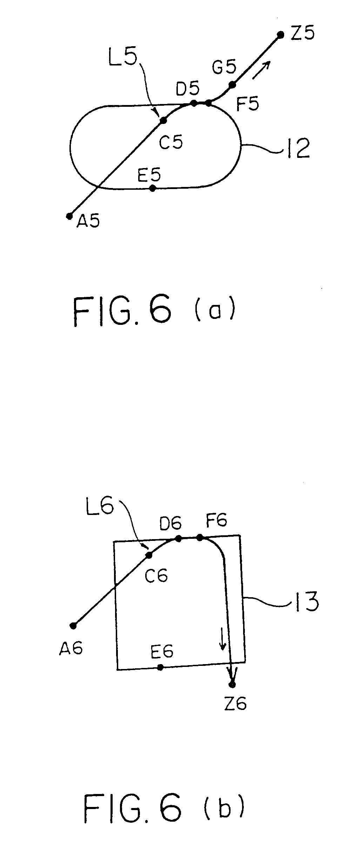

FIG. 6 (a) and FIG. 6 (b) show examples of the smooth path generated in cutting holes other than circular holes, in which FIG. 6 (a) shows an example of the smooth path for the slot, and FIG. 6 (b) shows an example of the smooth path for square hole. As shown in FIG. 6 (a) and FIG. 6 (b), even if the hole to be cut is a slot 12, or a square hole 13, smooth paths L5 and L6 are generated in the same manner as the circular hole 11 as described above. That is, the smooth path L5 for the slot 12 is generated as A5 → C5 → D5 → E5 → D5 → F5 → G5 → Z5, and the smooth path L6 for the square hole 13 is generated as A6 → C6 → D6 → E6 → D6 → F6 → G6 → Z6. In addition, although the diameter ⌀d is used as a size of the circular hole 11, in the case of the slot 12, it is only required to set e.g. the length of the longitudinal axis thereof, to the size of the hole. Further, with the square hole 13, it is only required to set e.g. the diagonal length of the square hole to the size of the hole to be cut.

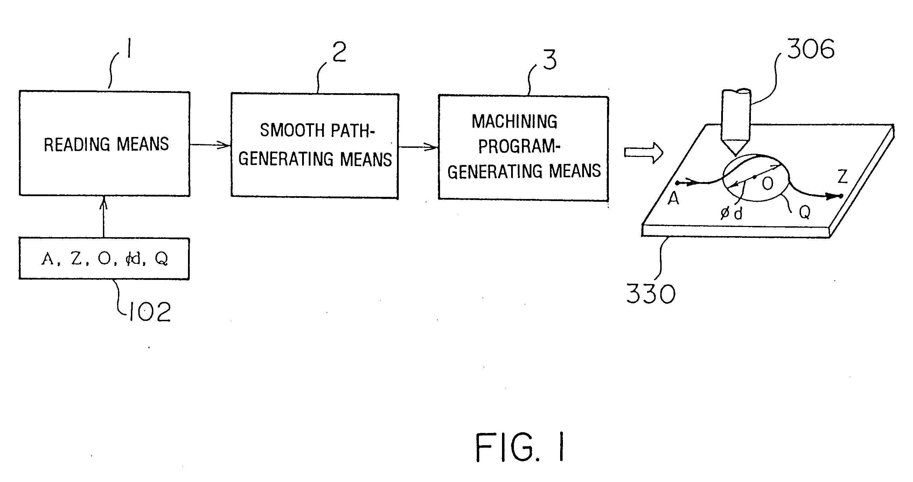

FIG. 1 is a block diagram showing construction of the present invention. In FIG. 1, reading means 1 reads the designation code Q for the shape of a hole to be cut, the size ⌀d of the hole, the central position O of the hole, and the start position A and the final stop position Z of the front end point of the machining head 306. Smooth path-generating means 2 generates a smooth path L from the designation code Q for the shape of the hole, the size ⌀d of the hole, the central position O of the hole, the start position A, and the final stop position Z, such that the whole path for the front end point of the machining head 306 forms a smooth one. Machining program-generating means 3 generates a machining program based on the smooth path L thus generated. According to the machining program, the machining head 306 moves to cut the hole through the workpiece 330.

Although, in the above description, generation of the smooth path L is carried out by the CRT/MDI 105 within the CNC 10, this is not limitative, but the smooth path L may be generated by a peripheral arithmetic unit outside the CNC 10, and then data of the smooth path L may be transferred to the CNC 10 by the use of a floppy disk.

As described heretofore, according to the invention, the smooth path for the front end point of the machining head extending from a start position to a final stop position is generated based on the shape of a hole to be cut, the size of the hole, the central position of the hole, the start position and the final stop position. These data can be easily input by an operator, based on which the smooth path L is generated automatically. Therefore, it is possible to generate a machining program for cutting along the smooth path, with ease in a short time period.

In the cutting process carried out according to the machining program, piercing and stoppage of laser output are completed during movement of the machining head, which makes it possible to cut a hole without stopping the machining head even once, thereby realizing a high-speed cutting.

## Claims

1. A laser beam machine for cutting a hole according to a machining program, comprising:
reading means (1) for reading the shape of the hole, a size of the hole, a central position of the hole, and a start position and a final stop position of a front end point of a machining head;
smooth path-generating means (2) generating a machining path from the shape of the hole, the size of the hole, the central position of the hole, the start position, and the final stop position, such that an overall path for the front end point of the machining head (306) becomes a smooth one, and wherein the machining path is formed by segments and circular arcs, and the segments and the circular arcs are generated such they join one another, and the path-generating means (2) depicts the circular arcs by multiplying the size of the hole by predetermined coefficients, and;
machining program generating means (3) for generating the machining program based on the machining path, wherein the machining program-generating means (3) generates the machining program such that the machining head (306) does not stop through the whole process from the start position to the final stop position.

2. A laser beam machine according to claim 1, wherein when the hole is a circular hole, the size of the hole is the diameter of the circular hole.

3. A laser beam machine according to claim 1, wherein the smooth path-generating means (2) allocates an overlapping section to part of the machining path around the hole.

4. A laser beam machine according to claim 3, wherein the machining program-generating means (3) generates the machining program such that irradiation of a laser beam from the machining head is stopped during a time period that the machining head passes along the overlapping section.

5. A laser beam machine according to claim 1, wherein the smooth path-generating means is provided within a numerical control unit or a peripheral arithmetic unit outside the numerical control unit.

## Patentansprüche

1. Laserstrahlvorrichtung zum Schneiden eines Loches nach einem Bearbeitungsprogramm, die aufweist:
Lesemittel (1) zum Lesen des Lochprofils, einer Lochgröße, eines Mittelpunktes des Lochs und einer Startposition sowie einer endgültigen Startposition der vordersten Stufe eines Bearbeitungskopfes,
Mittel (2) zum Erzeugen einer glatten Bahn, die eine Bearbeitungsbahn aus dem Lochprofil, der Lochgröße, dem Mittelpunkt des Loches, der Startposition und der endgültigen Stopposition erzeugen, so daß die gesamte Bahn für die vorderste Stufe des Bearbeitungskopfes (306) glatt wird, wobei die Bearbeitungsbahn von Abschnitten und kreisförmigen Bögen gebildet wird, die Abschnitte und kreisförmigen Bögen so erzeugt werden, daß sie aneinander anschließen und die bahnerzeugenden Mittel (2) die kreisförmigen Bogen durch Multiplikation der Lochgröße mit einem vorbestimmten Faktor darstellen, und
Bearbeitungsprogramm-erzeugende Mittel (3) zum Erzeugen des Bearbeitungsprogramms auf der Grundlage der Bearbeitungsbahn, wobei die Bearbeitungsprogramm-erzeugenden Mittel das Bearbeitungsprogramm so erzeugen, daß der Bearbeitungskopf (306) während des gesamten Verfahrens von der Startposition zur endgültigen Stopposition nicht anhält.

2. Laserstrahlvorrichtung nach Anspruch 1, dadurch gekennzeichnet, daß die Lochgröße der Durchmesser des Lochs ist, wenn dieses kreisförmig ist.

3. Laserstrahlvorrichtung nach Anspruch 1, dadurch gekennzeichnet, daß die eine glatte Bahn erzeugenden Mittel (2) einen überlappenden Abschnitt einem Teil der Bearbeitungsbahn um das Loch zuweisen.

4. Laserstrahlvorrichtung nach Anspruch 3, dadurch gekennzeichnet, daß die Bearbeitungsprogramm-erzeugenden Mittel (3) das Bearbeitungsprogramm so erzeugen, daß die Aussendung eines Laserstrahls vom Bearbeitungskopf während der Zeit unterbrochen wird, in der der Bearbeitungskopf den überlappenden Abschnitt passiert.

5. Laserstrahlvorrichtung nach Anspruch 1, dadurch gekennzeichnet, daß die die glatte Bahn erzeugenden Mittel eine numerische Steuereinheit oder eine separate arithmetische Einheit außerhalb der numerischen Steuereinheit haben.

## Revendications

1. Machine à faisceau laser pour découper un trou en fonction d'un programme d'usinage, comportant:
un moyen de lecture (1) pour lire la forme du trou, une taille du trou, un centre du trou et une position de départ et une position finale d'arrêt d'un point d'extrémité frontale d'une tête d'usinage;
un moyen (2) de génération d'une course progressive, générant une course d'usinage à partir de la forme du trou, de la taille du trou, du centre du trou, de la position de départ et de la position finale d'arrêt, de telle sorte qu'une course globale pour le point d'extrémité frontale de la tête d'usinage (306) devienne une course progressive, et dans lequel la course d'usinage est formée de segments et d'arcs de cercle, et les segments et les arcs de cercle sont générés de telle sorte qu'ils se joignent les uns aux autres, et le moyen (2) de génération de la course définit les arcs de cercles en multipliant la taille du trou par des coefficients prédéterminés, et
un moyen (3) de génération d'un programme d'usinage pour générer le programme d'usinage sur base de la course d'usinage, dans lequel le moyen (3) de génération du programme d'usinage génère le programme d'usinage de telle sorte que la tête d'usinage (306) ne s'arrête pas au cours de l'ensemble du processus allant de la position de départ à la position finale d'arrêt.

2. Machine à faisceau laser selon la revendication 1, dans laquelle, lorsque le trou est un trou circulaire, la taille du trou est le diamètre du trou circulaire.

3. Machine à faisceau laser selon la revendication 1, dans laquelle le moyen (2) de génération d'une course progressive attribue une section de chevauchement à une portion de la course d'usinage entourant le trou.

4. Machine à faisceau laser selon la revendication 3, dans laquelle le moyen (3) de génération d'un programme d'usinage génère le programme d'usinage de telle sorte que l'émission d'un faisceau laser par la tête d'usinage soit interrompue pendant un laps de temps au cours duquel la tête d'usinage suit la section de chevauchement.

5. Machine à faisceau laser selon la revendication 1, dans laquelle le moyen de génération d'une course progressive est prévu à l'intérieur d'une unité de commande numérique ou d'une unité arithmétique périphérique située à l'extérieur de l'unité de commande numérique.
